# EUROPEAN PATENT SPECIFICATION

(11) **EP 0 373 156 B1**
(45) Date of publication and mention of the grant of the patent: **04.08.1993**
(21) Application number: 90200076.9
(22) Date of filing: 03.10.1986
(51) Int. Cl.: H04N 9/29

(54) **Cathode ray tube degaussing circuitry**
Entmagnetisierungsschaltung für eine Kathodenstrahlröhre
Circuit de démagnétisation pour un tube à rayons cathodiques

(30) Priority: 11.10.1985 GB 8525138; 18.04.1986 US 853421
(43) Date of publication of application: 13.06.1990
(62) Divisional of application: 86307675.8
(73) Proprietor: RCA Thomson Licensing Corporation, Princeton, NJ 08540 (US)
(72) Inventor: Haferl, Peter Eduard, CH-8134 Adliswil (CH)
(74) Representative: Pratt, Richard Wilson

(56) References cited:
- GB-A- 2 150 400
- US-A- 4 489 253

## Description

This invention relates to degaussing circuitry for cathode ray tubes such as used in video display equipment.

Color cathode ray tubes require periodic degaussing or demagnetization to counteract the effects of the earth's magnetic field or of electromagnetic fields produced by nearby electrical devices, such as motors or appliances. These fields may magnetize metallic portions of the cathode ray tube, such as a shadow mask, causing degradation of the color purity of the tube. Video display apparatus, such as television receivers and computer or video display monitors, usually incorporate a degaussing circuit which is operative when the apparatus is energized to produce an alternating current field that decays toward zero in order to demagnetize the metallic components in the vicinity of the tube and of the tube itself.

A common type of degaussing circuit is powered from the AC line supply, which in the United States has a frequency of 60 Hz. This type of degaussing circuit ordinarily utilizes a positive temperature coefficient resistor, or thermistor, or other temperature sensitive component, which increases in resistance as it heats due to degaussing current flow. This causes the alternating degaussing current to decay in a manner that provides demagnetization of the cathode ray tube metallic components.

Another type of degaussing circuit utilizes a resonant or ring-down degaussing circuit. The resonant degaussing circuit operates by causing a capacitor connected in parallel with the degaussing coil to resonate with the coil in an oscillating manner. The finite Q of the resonant circuit causes the degaussing current to decay in the desired manner to effect demagnetization of the display apparatus metallic parts.

The resonant frequency of the degaussing circuit may be of the order of 2 kHz, so that degaussing is completed in less than 5 milliseconds. This time period is short compared to the vertical deflection interval, so that stray flux from the vertical deflection coils may interfere with the degaussing field resulting in a residual magnetism of the metallic parts of the tube. This may cause purity misregister on the display screen of the tube.

In order to eliminate the problem of such interfering stray vertical fields, the degaussing operation, in some prior art circuits, occurs when the vertical deflection field is close to its minimum value, so that little or no stray field is produced. In such arrangement, a timing signal that is produced from the vertical sync signal of an incoming video signal is used for starting the degaussing operation. The degaussing operation is timed to occur when the vertical deflection field is close to its minimum. Such arrangement may, disadvantageously, utilize a complex circuitry.

In accordance with an aspect of the invention, a degaussing circuit for a cathode ray tube of a video display apparatus comprises a resonating capacitor; first means for developing a voltage across said capacitor prior to a degaussing interval; a degaussing coil that is disposed about said cathode ray tube; a source of a control signal; and a first electronic switch having a control terminal which is responsive to said control signal for coupling said resonating capacitor to said degaussing coil in a degaussing circuit for generating an AC degaussing current in said coil having an amplitude that diminishes to a low value during said degaussing interval, characterized in that said control terminal of said first switch is coupled to said degaussing circuit by a signal path that provides positive feedback from said degaussing circuit to said control terminal so as to speed-up a switching transition time of said first switch.

In the Drawings:
FIGURE 1 illustrates a degaussing system embodying an aspect of the invention;
FIGURE 2 illustrates the waveform of the degaussing current in the circuit of FIGURE 1;
FIGURES 3a-3c illustrate waveforms useful in explaining the operation of the degaussing system of FIGURE 1; and
FIGURE 4 illustrates a second embodiment of the invention.

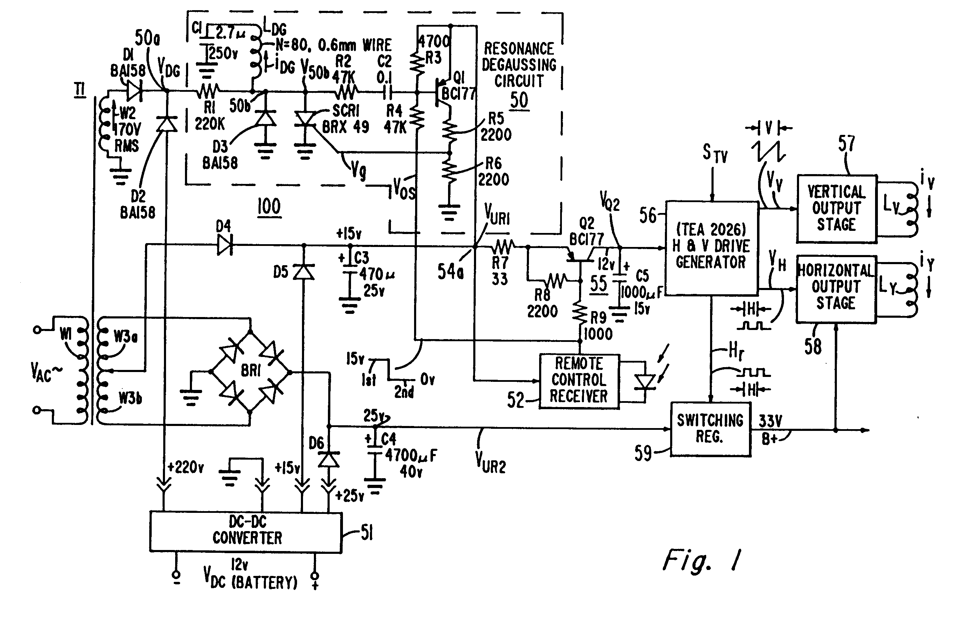

FIGURE 1 illustrates a degaussing system 100 embodying an aspect of the invention. Degaussing system 100 may be used in, for example, a television receiver that is not shown in detail in FIGURE 1. A remote control receiver 52 of the television receiver is responsive to user initiated commands coupled, for example, via an infrared transmission link.

During operation in a standby mode of the television receiver, remote control receiver 52 generates an on/off signal V_{OS} in a first or "off" state that prevents the occurrence of both horizontal and vertical scanning, as described later on. Upon receiving a user initiated "on" command via the infrared transmission link, remote control receiver 52 generates on/off signal V_{OS} at a second or "on" state that initiates degaussing.

The television receiver can be energized by a source of AC mains voltage V_{AC} or, alternately, by a source of a DC voltage V_{DC}, such as a battery. Degaussing is provided to a cathode ray tube such as, for example, Hitachi 250ATB22, of the television receiver, when either voltage V_{AC} or voltage V_{DC} is used for energizing the television receiver.

When degaussing system 100 operates from DC voltage V_{DC}, a DC-to-DC converter 51 that is energized by voltage V_{DC} supplies, via a diode D2, a DC voltage V_{DG} to a terminal 50a of a resistor R1. The other terminal of resistor R1, terminal 50b, is coupled to a degaussing coil L_{DG} that is coupled in series with a resonating capacitor C1. The other terminal of capacitor C1 that is remote from coil L_{DG} is coupled to a common ground terminal. The cathode electrode of a diode D3 is coupled to terminal 50b. The anode electrode of diode D3 is coupled to ground, the common conductor. Diode D3 conducts a degaussing current i_{DG} that flows in coil L_{DG} and capacitor C1 when current i_{DG} is, illustratively, positive. A silicon controlled rectifier switch SCR1 is coupled in parallel with diode D3 between terminal 50b and ground. Switch SCR1 conducts degaussing current i_{DG} when current i_{DG} is at the opposite, or negative polarity. Switch SCR1 is conductive when a voltage V_{g} at the gate electrode of switch SCR1 is positive. As described later on, voltage V_{g} becomes positive when on/off signal V_{OS} changes from the "off" to the "on" state. When on/off signal V_{OS} is in the "off" state, switch SCR1 is nonconductive and capacitor C1 is charged via large valued resistor R1 to a voltage that is equal to voltage V_{DG}.

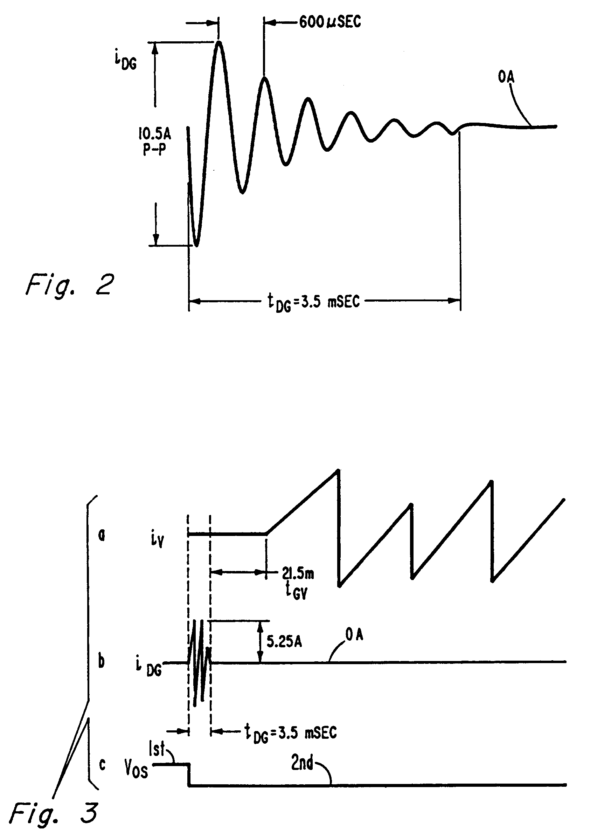

When voltage V_{g} becomes positive, switch SCR1 conducts. When switch SCR1 conducts, terminal 50b is coupled to ground, thus placing degaussing coil L_{DG} across resonating capacitor C1. The charge stored in resonating capacitor C1 prior to degaussing establishes, in a known manner, a ringing current i_{DG} such as shown in FIGURE 2 that flows in capacitor C1 of FIGURE 1 and in degaussing coil L_{DG}, for degaussing the picture tube. Current i_{DG} produces a maximum degaussing force of illustratively, 320 ampere-turns peak-to-peak.

Because of the finite value of the Q of the resonant degaussing circuit, the energy losses cause the amplitude of current i_{DG} to decay to substantially zero after a degaussing period t_{DG} of, illustratively, 3.5 milliseconds. During period t_{DG} several cycles of current i_{DG} occur that are sufficient to provide degaussing.

Since resistor R1 of FIGURE 1 is large, the current in resistor R1 that flows when switch SCR1 is conductive is small and below the holding current value of the SCR. Switch SCR1 remains conductive as long as voltage V_{g} is positive. Voltage V_{g} is positive as long as on/off signal V_{OS} is in the "on" state, as described later on. On/off signal V_{OS} is in the "on" state as long as the television receiver is operating in the normal operation mode.

A supply voltage V_{UR1} is coupled via a diode D5 to a terminal 54a of a resistor R7. The emitter electrode of a transistor switch Q1 is coupled to terminal 54a for applying voltage V_{UR1} to the emitter electrode. The collector electrode of transistor Q1 is coupled to ground via series resistors R5 and R6. Gate voltage V_{g} of switch SCR1 is developed at a junction terminal between resistors R5 and R6. On/off signal V_{OS} is coupled via a resistor R4 to the base electrode of transistor switch Q1 for controlling the operation of switch Q1.

In standby mode, when on/off signal V_{OS} is in the "off" state, signal V_{OS} is sufficently positive to turn off transistor switch Q1. Therefore, voltage V_{g} is zero, switch SCR1 is nonconductive and capacitor C1 is charged to a voltage that is equal to voltage V_{DG}. Switch SCR1 becomes nonconductive because switch SCR1 current that is supplied via resistor R1 is lower than the holding current of switch SCR1.

Immediately after on/off signal V_{OS} changes from the "off" to the "on" state, signal V_{OS} becomes less positive than voltage V_{UR1} The low voltage on the emitter electrode of switch Q1 causes transistor switch Q1 to conduct. When transistor switch Q1 begins conducting, voltage V_{g} becomes positive, causing switch SCR1 to become conductive and a voltage V_{50b} at terminal 50b to have a negative going transition.

In accordance with an aspect of the invention, the negative going transition of voltage V_{50b} is coupled via a capacitor C2 to the base electrode of transistor switch Q1, causing the base voltage of transistor switch Q1 to become less positive. When the base voltage of transistor switch Q1 becomes less positive, both the emitter and collector currents of transistor switch Q1 increase. Thus, capacitor C2 provides positive feedback that causes transistor switch Q1 to turn on faster. It follows that because of the positive feedback that is provided by capacitor C2, switch SCR1 also, advantageously is turned on faster.

As explained before, oscillations of current i_{DG} in degaussing coil L_{DG} and in resonating capacitor C1 begin when switch SCR1 becomes conductive. The peak amplitude of current i_{DG} in the first cycle of the oscillation is larger if switch SCR1 is turned on faster. Thus, for a given voltage V_{DG} the magnitude of the degaussing current i_{DG} can be, advantageously, increased by using the positive feedback of capacitor C2 that causes switch SCR1 to turn on faster. The faster increase of voltage V_{g} protects also switch SCR1. For example, if voltage V_{OS} ramps down slowly, it causes voltage V_{g} to increase slowly, resulting in insufficient gate triggering and that may damage silicon controlled rectifier switch SCR1.

Voltage V_{UR1} at terminal 54a is coupled through a resistor R7 of a delay circuit 55 to the emitter electrode of a transistor switch Q2. A capacitor C5 of delay circuit 55 is coupled to the collector electrode of transistor switch Q2. Capacitor C5 acts as a filter of a voltage V_{Q2} that is developed across capacitor C5 and that energizes a horizontal and vertical drive generator 56. On/off signal V_{OS} that controls also the switching operation of switch Q2 is coupled to the base electrode of transistor switch Q2 through a resistor R9.

During standby mode, signal V_{OS} is at the "off" state, illustratively equal to voltage V_{UR1}. Therefore, transistor switch Q2 is nonconductive. When the user wishes to turn on the television receiver, the user sends a corresponding command to remote control receiver 52 that causes on/off signal V_{OS} to change state to the "on" state. Immediately after signal V_{OS} changes to the "on" state, transistor switch Q2 becomes conductive and capacitor C5 of delay circuit 55 begins to charge via resistor R7. The time constant of resistor R7 and capacitor C5 is substantially longer than the degaussing period t_{DG} of FIGURE 2. Therefore, as described in detail later on, generator 56 begins normal operation after a predetermined delay.

Generator 56, that is energized by voltage V_{Q2}, receives a composite video signal S_{TV}, coupled from, for example, the video detector of the television receiver, that is not shown in the drawing. Generator 56 generates from signal S_{TV} an output control signal Vᵥ having a period V that is equal, in the PAL standard, to approximately 20 milliseconds, and an output control signal V_{H} that is equal, in the PAL standard, to approximately 64 microseconds. Signals Vᵥ and Hᵥ are coupled to the corresponding input terminals of a vertical output stage 57 and a horizontal output stage 58, respectively. Vertical output stage 57 generates, in accordance with signal Vᵥ, a vertical deflection current iᵥ. Similarly, horizontal output stage 58 generates, in accordance with signal Hᵥ, a horizontal deflection current i_{Y} in a horizontal deflection winding L_{Y}.

Generator 56 of FIGURE 1 also generates a horizontal rate output signal Hr that is coupled to a switching regulator 59 that generates a regulated voltage B+. Regulated voltage B+ provides the energizing voltage to horizontal output stage 58.

In order for generator 56 to generate signals Vᵥ and Hᵥ at amplitudes that are required for generating deflection currents iᵥ and i_{Y}, voltage V_{Q2} that provides power to generator 56 has to exceed a nominal level. As long as voltage V_{Q2} is below the nominal level, signal Vᵥ is not generated; therefore, the corresponding vertical deflection current iᵥ is zero.

In accordance with an aspect of the invention, the delay time between voltage V_{Q2} and signal V_{OS}, caused by resistors R7 and capacitor C5, causes voltage V_{Q2} to be below the nominal level throughout the degaussing period t_{DG} of FIGURE 2. Thus, degaussing terminates prior to the time in which vertical deflection current iᵥ of FIGURE 1 is generated. Therefore, the alternating current magnetic field that is generated by degaussing coil L_{DG} decays prior to the formation of the vertical deflection magnetic field. It follows that, advantageously, the vertical deflection field that remains zero during interval t_{DG}, does not cause residual magnetism of the metallic parts of the cathode ray tube.

In accordance with a feature of the invention, B+ voltage that energizes output stage 58 and other signal processing circuits of the television receiver, not shown in FIGURE 1, is generated after degaussing ceases.

FIGURES 3a-3c illustrate the waveforms of vertical deflection current iᵥ, degaussing current i_{DG} and on/off signal V_{OS}, respectively. Similar numbers and symbols in FIGURES 1, 2 and 3a-3c indicate similar items or functions. FIGURE 3b shows that degaussing current i_{DG}, that is initated by signal V_{OS} of FIGURE 3c, decays to substantially zero an interval t_{GV} that is approximately 21.5 milliseconds prior to the time at which vertical deflection current iᵥ of FIGURE 3a is generated. The length of interval t_{GV} is determined by capacitor C5 and resistor R7. Advantageously, capacitor C5 performs two different functions. First, it provides filtering. Second, it delays voltage V_{Q2}. Thus, delaying current iᵥ is obtained without adding additional components.

When AC voltage V_{AC} is coupled across a primary winding of a transformer T1, voltage V_{DG} is generated by half-wave rectifying the voltage across a secondary winding W2 of transformer T1 by a diode D1. When voltage V_{AC} is applied, diode D1 generates voltage V_{DG} and diode D2 is back biased. On the other hand, when voltage V_{DC} is applied, diode D2 provides voltage V_{DG} and diode D1 is back biased. Thus, diodes D1 and D2 form a wired inclusive "or" arrangement that isolates DC-to-DC converter 51 from transformer T1 when voltage V_{AC} is applied, and that isolates transformer T1 from converter 51 when voltage V_{DC} is applied. A similar arrangement is used for generating voltage V_{UR1} by utilizing the wired inclusive "or" arrangement of diodes D4 and D5. Likewise, a bridge rectifier BR1 supplies a voltage V_{UR2} that energizes remote control receiver 52 and switching regulator 59 when voltage V_{AC} is applied, whereas a diode D6 supplies voltage V_{UR2} when voltage V_{DC} is applied. Thus, degaussing system 100 is advantageously capable of providing degaussing when the television receiver operates from a DC source such as a battery, or from an AC source line voltage.

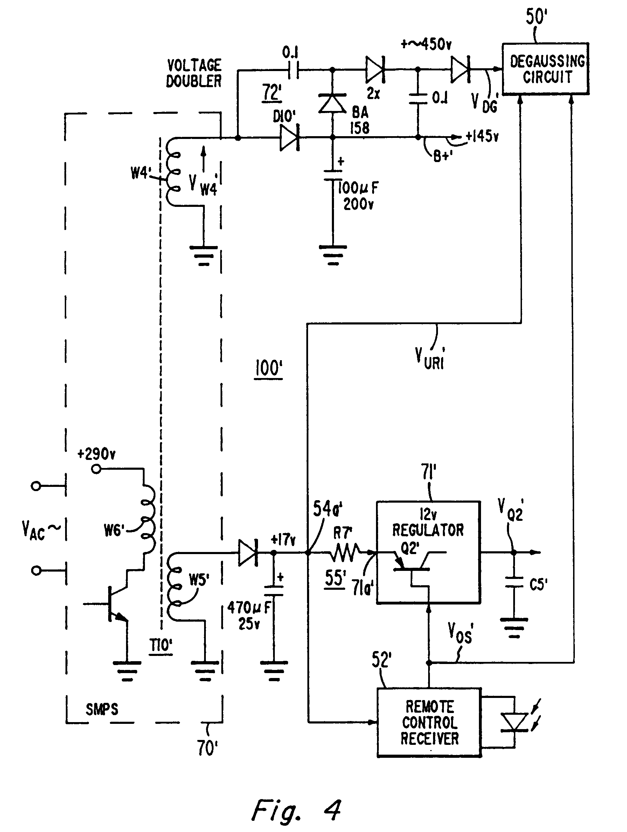

FIGURE 4 illustrates a degaussing system 100' embodying another aspect of the invention that obtains the energizing voltages by rectifying the voltages at secondary windings of a transformer of a switch mode power supply 70'. Similar numbers and symbols in FIGURES 1 and 4 indicate similar numbers or items.

Referring to degaussing system 100' of FIGURE 4, an AC voltage V_{W4}' across a secondary winding W4' of an output transformer T10' of switch mode power supply 70' is rectified and stepped-up in a conventional voltage doubler 72' to provide degaussing voltage V_{DG}' that is equal to approximately the sum of voltage B+' and the peak-to-peak voltage of voltage V_{W4}' across winding W4'. It should be understood that step-up ratios larger than two can be similarly obtained.

In degaussing system 100' resistor R7' is coupled to an input terminal 71a' of a voltage regulator 71' that includes, for example, an input switch Q2'. Switch Q2' couples voltage V_{UR1}' to the regulating stages of regulator 71' that generates output voltage V_{Q2}' across capacitor C5'. Voltage V_{Q2}' supplies the energizing voltage to a conventional vertical output stage that is not shown in FIGURE 4. Thus, capacitor C5' is the required filter capacitor of regulator 71'. Capacitor C5' also provides the capacitive portion of delay circuit 55' that operates, as described before, in a manner similar to delay circuit 55 of degaussing system 100 of FIGURE 1.

## Claims

1. A degaussing circuit for a cathode ray tube of a video display apparatus, comprising:
a resonating capacitor (C1);
first means (D1,R1) for developing a voltage across said capacitor (C1) prior to a degaussing interval;
a degaussing coil (L_{DG}) that is disposed about said cathode ray tube;
a source (52) of a control signal (V_{OS}); and
a first electronic switch (SCR1) having a control terminal which is responsive to said control signal (V_{OS}) for coupling said resonating capacitor (C1) to said degaussing coil (L_{DG}) in a degaussing circuit (C1, L_{DG}, SCR1) for generating an AC degaussing current in said coil (L_{DG}) having an amplitude that diminishes to a low value during said degaussing interval, characterized in that said control terminal of said first switch (SCR1) is coupled to said degaussing circuit by a signal path (R2,C2,Q2) that provides positive feedback from said degaussing circuit to said control terminal so as to speed-up a switching transition time of said first switch (SCR1).

2. A circuit according to Claim 1 characterized by a source (T1) of a supply voltage, a second switch (Q2) responsive to said control signal (V_{OS}) and coupled in a current path of current that is supplied by said source of said supply voltage, and a delay network (R7,C5) wherein said second switch (Q2) couples said supply voltage (V_{URI}) to said delay network (R7,C5) to develop at an output of said delay network a delayed supply voltage (V_{Q2} ) that is delayed until after at least a substantial portion of said degaussing interval has occurred, said delayed supply voltage being coupled to a deflection apparatus (56,57,58) for generating a deflection current (iᵥ) in a deflection winding (Lᵥ) when said delayed supply voltage (V_{Q2}) is developed, such that during said portion of said degaussing interval the generation of said deflection current is prevented.

3. A circuit according to Claim 2 characterized in that said first switch (SCR1) comprises a thyristor, and said signal path comprises a thyristor control switch (Q1) responsive to said control signal (V_{OS}) and having an output terminal (collector in Fig. 1) coupled to a control terminal (gate in Fig.1) of said thyristor (SCR1) and an input terminal (base in Fig. 1) coupled to an output terminal (anode in Fig. 1) of said thyristor (SCR1) via the remaining part (R2,C2) of said signal path that provides positive feedback.

## Patentansprüche

1. Entmagnetisierungs-Schaltungsanordnung (degaussing circuit) für eine Kathodenstrahlröhre (CRT) einer Video-Anzeigeeinrichtung,
- mit einer Resonanz-Kapazität (C1);
- mit ersten Mitteln (D1, R1) zum Bilden einer Spannung an/über dem Kondensator (C1) vor einem Entmagnetisierungs-Intervall (Degaussing-Intervall);
- mit einer Degaussing-Spule (L_{DG}), die um die Kathodenstrahlröhre (CRT) angeordnet ist;
- mit einer Quelle (52) eines Steuersignales (V_{OS});
- mit einem ersten elektronischen Schalter (SCR1), der einen Steueranschluß aufweist, welcher abhängig von dem Steuersignal (V_{OS}) ist zum Koppeln der Resonanz-Kapazität (C1) an die Degaussing-Spule (L_{DG}) in einer Entmagnetisierungs-Schaltungsanordnung (C1, L_{DG}, SCR1) zum Erzeugen eines AC-Entmagnetisierungs-Stromes in der Spule (L_{DG}) mit einer Amplitude, die auf einen niedrigen Wert während des Degaussing-Intervalls absinkt;
**dadurch gekennzeichnet,**
daß der Steueranschluß des ersten Schalters (SCR1) mit der Degaussing-Schaltung über einen Signalpfad (R2, C2, Q2) gekoppelt ist, der positive Rückkopplung von der Degaussing-Schaltung an den Steueranschluß herstellt, so daß die Schaltübergangs-Zeit (transition time) des ersten Schalters (SCR1) beschleunigt wird.

2. Schaltungsanordnung nach Anspruch 1,
**gekennzeichnet durch**
- eine Quelle (T1) von Versorgungsspannung;
- einen zweiten Schalter (Q2), der abhängig ist von dem Steuersignal (V_{OS}) und in einen Strompfad (von Strom) gekoppelt ist, der aus der Quelle von Versogungsspannung versorgt ist;
- ein Verzögerungs-Netzwerk (R7, C5), in dem der zweite Schalter (Q2) die Versorgungsspannung (V_{URI}) an das Verzögerungs-Netzwerk (R7, C5) koppelt, um an einem Ausgang des Verzögerungs-Netzwerkes eine verzögerte Versorgungsspannung (V_{Q}₂) zu bilden, die verzögert ist, bis zumindest ein wesentlicher Abschnitt des Degaussing-Intervalls verstrichen ist;
- wobei die verzögerte Versorgungsspannung an eine Ablenk-Einrichtung (56,57,58) gekoppelt ist/wird zum Erzeugen eines Ablenkstromes (iᵥ) in einer Ablenkwicklung (Lᵥ), wenn die verzögerte Versorgungsspannung (V_{Q}₂) gebildet wird, so daß während des Abschnitts des Degaussing-Intervalls die Erzeugung des Ablenkstromes unterbleibt.

3. Schaltungsanordnung nach Anspruch 2,
**dadurch gekennzeichnet,**
- daß der erste Schalter (SCR1) einen Thyristor umfaßt;
- daß der Signalpfad einen Thyristor-Steuerschalter (Q1) aufweist, der abhängig von dem Steuersignal (V_{OS}) ist und der einen - mit einem Steueranschluß (Gate in Fig. 1) des Thyristors (SCR1) gekoppelten - Ausgangsanschluß (Kollektor in Fig. 1) sowie einen Eingangsanschluß (Basis in Fig. 1) hat, der mit einem Ausgangsanschluß (Anode in Fig. 1) des Thyristors (SCR1) gekoppelt ist, und zwar über den verbleibenden Teil (R2, C2) des Signalpfades, der positive Rückkopplung herstellt.

## Revendications

1. Circuit de démagnétisation pour un tube à rayons cathodiques d'un dispositif d'affichage vidéo comprenant :
- un condensateur de résonnance (C1) ;
- des premiers moyens (D1, R1) pour développer une tension sur ledit condensateur (C1) avant un intervalle de démagnétisation;
- une bobine de démagnétisation (L_{DG}) qui est disposée autour dudit tube à rayons cathodiques ;
- une source (52) d'un signal de commande (V_{OS}) ; et
- un premier commutateur électronique (SCR 1) ayant une borne de commande qui agit en réponse audit signal de commande (V_{OS}) pour coupler ledit condensateur de résonnance (C1) à ladite bobine de démagnétisation (L_{DG}) dans un circuit de démagnétisation (C1, L_{DG}, SCR1) pour générer un courant alternatif de démagnétisation dans ladite bobine (L_{DG}), ayant une amplitude qui diminue jusqu'à une valeur basse pendant ledit intervalle de démagnétisation, caractérisé en ce que ladite borne de commande dudit premier commutateur (SCR1) est couplée au circuit de démagnétisation par une trajectoire de signal (R2, C2, Q2) qui fournit une réaction positive à partir dudit circuit de démagnétisation vers ladite borne de commande de manière à accélérer une période de transition de commutation dudit premier commutateur (SCR1).

2. Circuit selon la revendication 1 caractérisé par une source (T1) d'une tension d'alimentation, un second commutateur (Q2) agissant en réponse audit signal de commande (V_{OS}) et couplé dans une trajectoire de courant, à un courant qui est délivré par ladite source de tension d'alimentation, et un réseau retard (R7, C5) dans lequel ledit second commutateur (Q2) couple ladite tension d'alimentation (V_{URI}) dudit réseau retard (R7, C5) pour développer à une sortie dudit réseau retard, une tension d'alimentation retardée (V_{Q}₂) qui est retardée jusqu'à ce que au moins une portion substantielle dudit intervalle de démagnétisation se soit produite, ladite tension d'alimentation retardée étant couplée à un dispositif de déviation (56, 57, 58) pour générer un courant de déviation (iᵥ) dans un enroulement de déviation (Lᵥ) lorsque ladite tension d'alimentation retardée (V_{Q}₂) est développée, de manière que pendant ladite portion dudit intervalle de démagnétisation, on empêche la génération dudit courant de déviation.

3. Circuit selon la revendication 2 caractérisé en ce que ledit premier commutateur (SCR1) comprend un thyristor et ladite trajectoire de signal comprend un commutateur de commande de thyristor (Q1) agissant en réponse audit signal de commande (V_{OS}) et ayant une borne de sortie (collecteur sur la figure 1) couplée à une borne de commande (grille sur la figure 1) dudit thyristor (SCR1) et une borne d'entrée (base sur la figure 1) couplée à une borne de sortie (anode sur la figure 1) dudit thyristor (SCR1) par l'intermédiaire de la partie restante (R2, C2) de la trajectoire de signal qui fournit la réaction positive.
